# EUROPÄISCHE PATENTANMELDUNG

(11) **EP 0 943 470 A2**
(43) Veröffentlichungstag der Anmeldung: **22.09.1999**
(21) Anmeldenummer: 99104334.0
(22) Anmeldetag: 04.03.1999
(51) Int. Cl.: B60G 17/04

(54) **Druckmittelversorgung für pneumatische Stellglieder von zu schaltenden Hilfsaggregaten in einem Kraftfahrzeug**

(30) Priorität: 16.03.1998 DE 19811305
(71) Anmelder: Continental Aktiengesellschaft, 30165 Hannover (DE)
(72) Erfinder: Krauss, Hans-Peter, 30453 Hannover (DE)

(57) **Zusammenfassung**

Zur pneumatischen Versorgung mindestens eines pneumatisch betreibbaren Stellgliedes (30 und/oder 34) eines Hilfsaggregats (26 und/oder 32) in einem Kraftfahrzeug wird die in einer vorhandenen Luftfederanordnung (Niveauregelanlage) befindliche Druckluft verwendet.

Zu diesem Zweck ist das Schaltmedium (Druckluft) für das pneumatisch schaltbare Hilfsaggregat (26 bzw. 32) direkt aus einer Luftfeder (2) oder deren Druckluftzuleitung (14) abzweigbar.
Das pneumatisch schaltbare Hilfsaggregat (26 bzw. 32) kann z. B. ein Getriebe (26) sein, das von der ständig unter Druck stehenden Druckluftleitung (14) der Niveauregelanlage oder direkt von der Luftfeder (2) ausgehend über einen in der Druckluftleitung (14) angeordneten Abzweig (20) und ein Magnetventil (22) ansteuerbar ist. Zur Schaltung des Getriebes (26) wird die Druckluft über eine weitere Druckluftleitung (28) zu einem pneumatischen Stellglied (30) geleitet.

## Beschreibung

Die Erfindung betrifft diverse Hilfsaggregate in einem Kraftfahrzeug, wie z. B. Zentralverriegelung, Servolenkung usw., die jeweils pneumatische Stellglieder umfassen, wofür jeweils eine Druckmittelquelle benötigt wird. Insbesondere betrifft die Erfindung ein Verfahren und eine Vorrichtung für die Druckmittelversorgung der pneumatischen Stellglieder der genannten Hilfsaggregate.

Es ist üblich, derartige pneumatikunterstützten Hilfsaggregate, wie Zentralverriegelung usw. jeweils mit einer eigenen Druckmittelquelle zu versehen. D. h.: Die Schaltung erfolgt mit Energie aus zusätzlich eingebauten pneumatischen Versorgungseinheiten, bzw. elektrisch. Das ist relativ aufwendig und damit teuer.

Die Aufgabe der Erfindung besteht darin, eine derartig aufwendige Druckmittelversorgung zu vereinfachen. Und zwar sollen pneumatische Schaltvorgänge ermöglicht werden, ohne Verwendung zusätzlicher Bauteile für Druckluftversorgung oder deren Regulierung.

Bei einem mit Luftfedern ausgestatteten Fahrzeug wird diese Aufgabe durch die Verwendung der Druckmittelquelle einer Niveauregelanlage gemäß Anspruch 1 gelöst. Vorteilhafte Einzelheiten und Weiterbildungen sind in den Unteransprüchen genannt.

Aus der in Anspruch 1 dargestellten Lösung der Erfindung ist ersichtlich, daß die Erfindung nur bei Fahrzeugen einsetzbar ist, die mit einer auf Luftfedern basierenden Niveauregelanlege ausgestattet sind.

Bei Luftfedern, die in den verschiedensten Ausführungsformen bekannt sind, wird durch Zufüllen oder Ablassen von Druckluft der Abstand zwischen Karosserie und Achse eines Fahrzeugs auf einer definierten Regellage konstantgehalten.

Die in der Luftfederanordnung vorhandene Druckluft wird nun erfindungsgemäß zur Druckbeaufschlagung der diversen, im Fahrzeug befindlichen pneumatischen Stellgliedern von Hilfsaggregaten mitbenutzt.

Dafür wird das Schaltmedium (Druckluft) aus einer vorhandenen Niveauregelanlage direkt aus den Luftfedern, bzw. deren Zuleitungen abgezweigt. Das Wiederauffüllen wird indirekt von der Regelung der Niveauregelanlage gesteuert, so daß hierfür weder separate Druckspeicher noch Luftversorgungsaggregate oder Regelelektronik benötigt werden.

Der generelle Vorteil der Erfindung besteht darin, daß ohne zusätzliche Bauteile für eine Druckversorgung sehr kostengünstige Möglichkeiten geschaffen werden, verschiedene Elemente, wie z. B. Vorgelegegetriebe, Zentralverriegelung, Bremskraftverstärker usw. pneumatisch zu schalten.

Mit der erfindungsgemäßen Verwendung der Druckmittelquelle der Luftfedern für die diversen Hilfsaggregate des Fahrzeugs ist eine kurzfristige Verfügbarkeit von Druckluft ohne zusätzliche Luftversorgungseinheit bzw. zusätzliche Luftspeicher gegeben. Es ist keine zusätzliche Regelung zur Bereitstellung der Druckluft erforderlich. Die erfindungsgemäße Anpassung der Druckmittelquelle der Fahrzeugluftfedern an die neue Verwendung erfolgt mit Hilfe von wenigen kostengünstigen Bauteilen.

Durch eine Begrenzung der aus der Niveauregelanlage entnehmbaren Menge der Druckluft ist stets genügend Druckluft zum Betrieb der Luftfeder vorhanden.

Die für die Hilfsaggregate vorgesehenen pneumatischen Stellglieder sind so auszuwählen, daß sie für die in Luftfedern vorkommenden Luftdrücke (Minimal- bis Maximalluftdruck) geeignet sind.

Die aus Federbewegungen resultierenden Druckschwankungen, die über die Luftleitungen auch auf die pneumatischen Stellglieder der Hilfsaggregate übertragen werden, können durch den Einbau von Drosseln verringert werden.

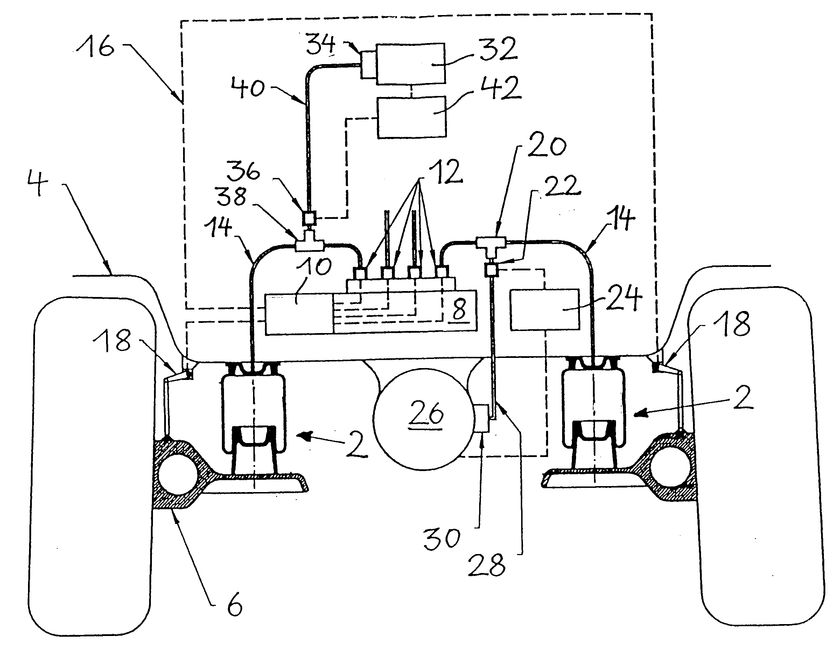

Die Erfindung wird anhand des in einer Zeichnung dargestellten Ausführungsbeispiels beschrieben. Die Abbildung zeigt eine Prinzipdarstellung eines mit Luftfedern ausgestatteten Fahrzeugs im Querschnitt.

Wie gesagt, sollen Luftfedern 2 den Abstand zwischen Karosserie 4 und Achse 6 eines Fahrzeugs konstanthalten. Zu diesem Zweck wird Druckluft von einem Luftversorgungsaggregat (Druckmittelquelle) 8 bereitgestellt und über von der Steuerelektronik 10 einer Niveauregelanlage anzusteuernde Magnetventile 12 und über Druckluftleitungen 14 zu den Luftfedern 2 geleitet.

Die Steuerelektronik 10, der Niveauregelanlage steuert über eine Signalleitung 16 die Magnetventile 12 entsprechend der Höhenstandssignale von Niveausensoren 18 an und sorgt dafür, daß Luft zugefüllt oder abgelassen wird, so daß die Regellage des Fahrzeugs konstant gleich einem vorgegebenen Wert bleibt (oder verändert werden kann). - Dies ist nicht neu.

Erfindungsgemäß wird nun von der ständig unter Druck stehenden Druckluftleitung 14 der Niveauregelanlage (oder direkt von den Luftfedern 2 ausgehend) über einen Abzweig 20 und ein (weiteres) Magnetventil 22, welches von einer Steuerelektronik 24 eines Getriebes 26 bei Bedarf angesteuert wird, Druckluft über eine weitere Druckluftleitung 28 zu einem pneumatischen Stellglied 30 geleitet, welches dann das Getriebe 26 schaltet.

Gleiches gilt für eine weitere, zu schaltende Einheit 32, wie z. B. eine Zentralverriegelung mit den zugehörenden Bauteilen, wie pneumatisches Stellglied 34, Magnetventil 36, Abzweig 38, Druckluftleitung 40, und Steuerelektronik 42 der zu schaltenden Einheit 32.

Während eines Schaltvorgangs, bei dem Druckluft aus den Luftfedern 2 abgelassen wird, sinkt die Niveaulage des Fahrzeuges geringfügig entsprechend dem Luftbedarf ab und wird über die Niveauregelung dann wieder aufgefüllt.

### Bezugszeichenliste

- 2: Luftfeder
- 4: Karosserie
- 6: Achse
- 8: Luftversorgungsaggregat (Druckmittelquelle)
- 10: Steuerelektronik
- 12: Magnetventil
- 14: Druckluftzuleitung
- 16: Signalleitung
- 18: Niveausensor
- 20: Abzweig
- 22: (weiteres) Magnetventil
- 24: Steuerelektronik
- 26: zu schaltende Einheit (z. B. Getriebe)
- 28: (weitere) Druckluftleitung
- 30: pneumatisches Stellglied (für zu schaltende Einheit, hier: Getriebe)
- 32: zu schaltende Einheit (z. B. Zentralverriegelung)
- 34: pneumatisches Stellglied (für zu schaltende Einheit, hier: z. B. Zentralverriegelung)
- 36: Magnetventil (für zu schaltende Einheit, hier: z. B. Zentralverriegelung)
- 38: Abzweig (für zu schaltende Einheit, hier: z. B. Zentralverriegelung)
- 40: Druckluftleitung (für zu schaltende Einheit, hier: z. B. Zentralverriegelung)
- 42: Steuerlektronik (für zu schaltende Einheit, hier: z. B. Zentralverriegelung)

## Patentansprüche

1. Verfahren zur Pneumatischen Versorgung mindestens eines pneumatischen Stellgliedes eines zu schaltenden Hilfsaggregats (26 und/oder 32) in einem Kraftfahrzeug,
**gekennzeichnet durch**
die Verwendung der Druckmittelquelle (8) einer Niveauregelanlage.

2. Vorrichtung zur Durchführung des Verfahrens nach Anspruch 1,
**dadurch gekennzeichnet,**
daß das Schaltmedium (Druckluft) für das pneumatisch zu schaltenden Hilfsaggregat (26 bzw. 32) aus der vorhandenen Niveauregelanlage und zwar direkt aus einer Luftfeder (2) oder deren Druckluftzuleitung (14) abzweigbar ist.

3. Druckmittelversorgungseinrichtung nach Anspruch 1 oder 2,
**dadurch gekennzeichnet,**
daß das pneumatisch schaltbare Hilfsaggregat (26 bzw. 32) ein pneumatisches Stellglied (30 bzw. 34) aufweist,
dessen Druckmittelversorgung direkt von der Regelung der Niveauregelanlage steuerbar ist.

4. Druckmittelversorgungseinrichtung nach einem der Ansprüche 1 bis 3,
**dadurch gekennzeichnet,**
daß die kurzfristig aus der Niveauregelanlage entnehmbare Menge der Druckluft begrenzbar ist,
wobei der Systemdruck direkt vom Fahrzeuggewicht abhängig ist.

5. Druckmittelversorgungseinrichtung nach einem der Ansprüche 1 bis 4,
**dadurch gekennzeichnet,**
daß das Stellglied (30 bzw 34) für Luftdrücke im Bereich von Minimal- bis Maximaldruck der Luftfeder 82) einsetzbar ist.

6. Druckmittelversorgungseinrichtung nach einem der Ansprüche 1 bis 5,
**dadurch gekennzeichnet,**
daß das pneumatisch zu schaltende Hilfsaggregat (26 bzw. 32) ein Getriebe (26) ist,
das von der ständig unter Druck stehenden Druckluftleitung (14) der Niveauregelanlage oder direkt von der Luftfeder (2) ausgehend über einen in der Druckluftleitung (14) angeordneten Abzweig (20) und ein Magnetventil (22), ansteuerbar ist,
wobei Druckluft über eine weitere Druckluftleitung (28) zu einem pneumatischen Stellglied (30) zur Schaltung des Getriebes (26) geleitet wird.

7. Druckmittelversorgungseinrichtung nach einem der Ansprüche 1 bis 5,
**dadurch gekennzeichnet,**
daß das pneumatisch schaltbare Hilfsaggregat (26 bzw. 32) eine Zentralverriegelung mit den zugehörigen Bauteilen: pneumatisches Stellglied (34), Magnetventil (36) Abzweig (38), Druckluftleitung (40) und Steuerelektronik (42) ist.

8. Druckmittelversorgungseinrichtung nach einem der vorhergehenden Ansprüche,
**gekennzeichnet durch**
den Einbau jeweils einer Drossel in den zu den Stellgliedern (30, 34) führenden Luftleitungen (28, 40).
